(19) Europäisches Patentamt
European Patent Office
Office européen des brevets

(11) **EP 2 995 971 A1**

(12) **EUROPÄISCHE PATENTANMELDUNG**

(43) Veröffentlichungstag:
**16.03.2016  Patentblatt 2016/11**

(51) Int Cl.:
*G01S 7/295* [(2006.01)]     *G01S 13/93* [(2006.01)]

(21) Anmeldenummer: **15179276.9**

(22) Anmeldetag: **31.07.2015**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA**

(30) Priorität: **12.09.2014  DE 102014218351**

(71) Anmelder: **ROBERT BOSCH GMBH**
**70442 Stuttgart (DE)**

(72) Erfinder: **Lehnertz, Benedikt**
**71634 Ludwigsburg (DE)**

(54) **VERFAHREN UND SYSTEM ZUR POSITIONSBESTIMMUNG**

(57)     Verfahren zur Bestimmung der Position eines beweglichen, rangingfähigen Sensors in einem globalen Koordinatensystem ($K_G$), gekennzeichnet durch die folgenden Schritte:

(a) zu einem Zeitpunkt $t_0$, an dem die Koordinaten des Sensors im globalen Koordinatensystem ($K_G$) bekannt sind: Messen, mit Hilfe des Sensors, der Koordinaten mehrerer stationärer Objekte (18) in einem Sensorsystem ($K_S$), d. h., einem in Bezug auf den Sensor festen Koordinatensystem,

(b) zu einem späteren Zeitpunkt $t_1$, nachdem der Sensor bewegt wurde: Messen der Änderung der Koordinaten der Objekte (18) im Sensorsystem ($K_S$),

(c) Bestimmen der Ortsveränderung (d) der Objekte (18) im Sensorsystem ($K_S$),

Bestimmen der Ortsveränderung des Sensors anhand der gemessenen Änderung der Koordinaten,

(d) Bestimmen der Koordinaten des Sensors ($p_G$) im globalen Koordinatensystem ($K_G$) zum Zeitpunkt $t_1$,

(e) Iterieren der Schritte (a) bis (d), jeweils mit dem vorherigen Zeitpunkt $t_1$ als neuem Zeitpunkt $t_0$.

Fig. 2

EP 2 995 971 A1

**Beschreibung**

Die Erfindung betrifft ein Verfahren zur Bestimmung der Position eines beweglichen, rangingfähigen Sensors in einem globalen Koordinatensystem.

Stand der Technik

Unter einem "rangingfähigen" Sensor soll hier ein Sensor verstanden werden, der in der Lage ist, die Orte von Objekten in seiner Umgebung zu messen. Beispiele sind Radarsensoren und Lidarsensoren.

In Kraftfahrzeugen werden häufig radarbasierte Systeme zur Kollisionswarnung und zur Kollisionsvermeidung eingesetzt. Mit Hilfe eines winkelauflösenden Radarsensors werden die Orte und vorzugsweise auch die Relativgeschwindigkeiten von potentiellen Hindernissen im Umfeld des eigenen Fahrzeugs gemessen, so dass bei drohender Kollisionsgefahr eine Warnung ausgegeben werden kann oder geeignete Gegenmaßnahmen automatisch ausgelöst werden können. Für eine zuverlässige Bewertung der Kollisionsgefahr ist jedoch neben den Orts- und Bewegungsdaten des potentiellen Hindernisses auch eine genaue Kenntnis der Eigenbewegung des mit dem Sicherheitssystem ausgerüsteten Fahrzeugs erforderlich. Bei bekannten Sicherheitssystemen werden dazu die Daten zusätzlicher Sensoren benötigt, beispielsweise Daten von Raddrehzahlsensoren, Beschleunigungssensoren und dergleichen.

Aufgabe der Erfindung ist es, die Abhängigkeit von externer Sensorik bei der Bestimmung der Position und Eigenbewegung von Rangingsystemen zu verringern.

Diese Aufgabe wird erfindungsgemäß gelöst durch ein Verfahren, bei dem der rangingfähige Sensor selbst dazu benutzt wird, die eigene Position in einem globalen Koordinatensystem zu bestimmen. Unter einem "globalen Koordinatensystem" soll in diesem Zusammenhang ein ortsfestes Koordinatensystem verstanden werden, das es erlaubt, die Bewegung des Sensors innerhalb eines gewissen Raumbereiches darzustellen.

Aus den zu verschiedenen Zeiten aufgezeichneten Positionsdaten lässt sich dann die Eigenbewegung des Sensors - und damit bei Sicherheitssystemen für Kraftfahrzeuge auch die Eigenbewegung des Fahrzeugs - rekonstruieren.

Offenbarung der Erfindung

Im einzelnen umfasst das erfindungsgemäße Verfahren die folgenden Schritte:

(a) zu einem Zeitpunkt $t_0$, an dem die Koordinaten des Sensors im globalen Koordinatensystem bekannt sind: Messen, mit Hilfe des Sensors, der Koordinaten mehrerer stationärer Objekte in einem Sensorsystem, d. h., einem in Bezug auf den Sensor festen Koordinatensystem,

(b) zu einem späteren Zeitpunkt $t_1$, nachdem der Sensor bewegt wurde: Messen der Änderung der Koordinaten der Objekte im Sensorsystem,

(c) Bestimmen der Ortsveränderung des Sensors anhand der gemessenen Änderung der Koordinaten,

(d) Bestimmen der Koordinaten des Sensors im globalen Koordinatensystem zum Zeitpunkt $t_1$,

(e) Iterieren der Schritte (a) bis (d), jeweils mit dem vorherigen Zeitpunkt $t_1$ als neuem Zeitpunkt $t_0$.

Dieses Verfahren erlaubt es, die Eigenbewegung des Sensors im globalen Koordinatensystem zu verfolgen, indem man stationäre Objekte, die sich jeweils im Ortungsbereich des Sensors befinden, als Bezugspunkte benutzt und sich dann bei der Bestimmung der Eigenbewegung an diesen Objekten "entlang hangelt".

Das Verfahren ist somit von externer Sensorik unabhängig, und zu seiner Durchführung werden lediglich der rangingfähige Sensor sowie ein

Datenverarbeitungssystem zur Auswertung der Daten des Sensors benötigt. Bei Sicherheitssystemen für Kraftfahrzeuge ergibt sich noch der zusätzliche Vorteil, dass zur Messung der Eigenbewegung der gleiche Sensor benutzt wird, mit dem auch die Bewegungen der potentiellen Hindernisse gemessen werden, so dass systematische Fehler im Sensor, beispielsweise Justagefehler, die zu einer Verfälschung der Messergebnisse führen, bei der Bestimmung der Relativbewegung von eigenem Fahrzeug und potentiellem Hindernis automatisch eliminiert werden.

Ein weiterer Vorteil besteht darin, dass das Verfahren, da es nicht auf externe Sensorik angewiesen ist, für Fahrzeuge unterschiedlichster Art angewandt werden kann, einschließlich Fahrzeugen, bei denen spezielle Sensoren zur Messung der Eigenbewegung nicht vorhanden sind oder auf unterschiedlichen Messprinzipien beruhen und somit eine unterschiedliche Art der Datenauswertung erfordern. Beispielsweise ist das erfindungsgemäße Verfahren bei Schienenfahrzeugen ebenso anwendbar wie bei Straßenfahrzeugen.

Grundsätzlich lässt sich das erfindungsgemäße Verfahren auch in Navigationssystemen nutzen, die damit unabhängig (oder unabhängiger) von GPS Signalen oder sonstigen externen Signalquellen werden.

Vorteilhafte Weiterbildungen und Ausgestaltungen der Erfindung sind in den Unteransprüchen angegeben.

Ein Kriterium zur Erkennung stationärer Objekte in Schritt (a) kann beispielsweise darin bestehen, dass in einem Ensemble aus einer größeren Anzahl von Objekten diejenigen Objekte stationär sein werden, deren Positionen relativ zueinander sich im Lauf der Zeit nicht ändern. Das gilt insbesondere für Objekte, die relativ weit voneinander entfernt sind, so dass es sich nicht um verschiedene Teile eines größeren zusammenhängenden Objektes handeln kann.

Bei Fahrzeugen kann weiterhin das Kriterium benutzt werden, dass bei Stillstand des eigenen Fahrzeugs diejenigen Objekte stationär sind, die sich nicht relativ zum eigenen Fahrzeug bewegen. Wenn sich das eigene Fahrzeug dann in Bewegung setzt, können neue Objekte daran als stationär erkannt werden, dass sie sich nicht relativ zu den zuvor erkannten stationären Objekten bewegen. In diesem Fall wird lediglich die Information benötigt, dass das eigene Fahrzeug sich nicht bewegt. Diese Information ist auch ohne externen Bewegungssensor verfügbar, beispielsweise durch Überwachung des Zustands des Antriebssystems, des Getriebes, der Feststellbremse und dergleichen.

Zur Bestimmung der Ortsveränderung des Sensors in Schritt (c) ist es zweckmäßig, anhand der gemessenen Koordinaten der stationären Objekte ein Objektsystem zu konstruieren, also ein Koordinatensystem, das in Bezug auf diese Objekte fest ist. dieses Objektsystem kann dann so lange zur Verfolgung der Ortsveränderungen des Sensors benutzt werden, wie die betreffenden Objekte sich noch im Ortungsbereich befinden. Erst dann muss ein neues Objektsystem konstruiert und die Koordinatentransformation in das globale System neu berechnet werden.

Für die Bestimmung der dynamischen Größen, die die Eigenbewegung charakterisieren, beispielsweise die Eigengeschwindigkeit, die Beschleunigung, den Krümmungsradius der durchfahrenen Trajektorie und dergleichen, ist dann eine Transformation in das globale Koordinatensystem of gar nicht erforderlich. Diese Größen lassen sich auch unmittelbar im Objektsystem bestimmen (das dann vorübergehend seinerseits ein globales Koordinatensystem bildet). Bei Kollisionswarn- und Kollisionsvermeidungssystemen werden dann zweckmäßig auch die Bewegungen der potentiellen Hindernisse in diesem Objektsystem verfolgt.

Für die Konstruktion des Objektsystems werden mindestens zwei stationäre Objekte benötigt. Der Ortsvektor von einem Objekt zum anderen bildet dann - ggf. nach Normierung - einen der Basisvektoren des Objektsystems, und den zweiten Basisvektor erhält man einfach durch Drehung um 90°. Wenn mehr als zwei stationäre Objekte vorhanden sind, kann man zur Konstruktion des Objektsystems jedoch auch drei oder mehr Objekte benutzen. Dadurch wird die Bestimmung des Objektsystems robuster gegenüber Messfehlern, da sich solche Fehler bei der Mittelung über mehrere Objekte herausmitteln. Außerdem wird so eine größere Kontinuität erreicht, wenn einzelne stationäre Objekte aufgrund der Bewegung des eigenen Fahrzeugs aus dem Ortungsbereich des Sensors verschwinden und dafür neue stationäre Objekte im Ortungsbereich auftreten.

Gegenstand der Erfindung ist außerdem ein Positionsbestimmungssystem für Fahrzeuge, das auf dem obigen Verfahren beruht, sowie ein Softwareprodukt zur Durchführung des Verfahrens.

Im folgenden wird ein Ausführungsbeispiel anhand der Zeichnung näher erläutert.

Es zeigen:

Fig. 1     eine Grundrissskizze zweier Kraftfahrzeuge, von denen eines mit einem Kollisionswarnsystem ausgerüstet ist, bei dem die Erfindung Anwendung findet;

Fig. 2     ein Diagramm zur Erläuterung der Grundzüge des erfindungsgemäßen Verfahrens;

Fig. 3     ein Diagramm zur Erläuterung von Koordinatentransformationen bei einer konkreten Umsetzung des erfindungsgemäßen Verfahrens;

Fig. 4     ein Diagramm eines Fahrzeugs beim Durchfahren einer Trajektorie, die mit dem erfindungsgemäßen Verfahren gemessen und aufgezeichnet wird; und

Fig. 5     ein Diagramm zur Erläuterung eines Verfahrens zur Bestimmung eines Krümmungsradius der Trajektorie gemäß Fig. 4.

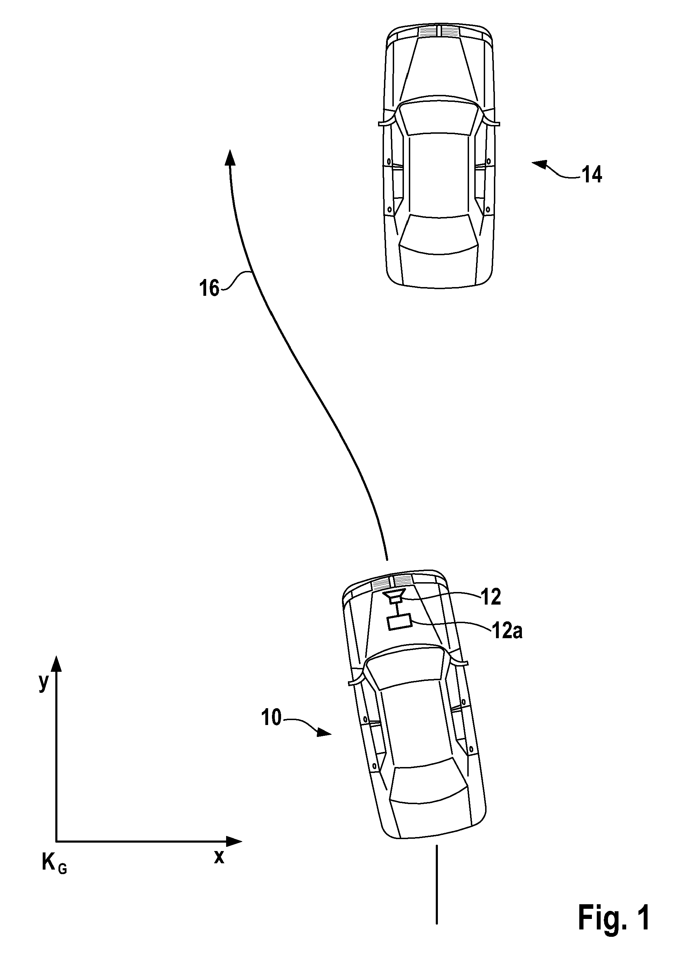

Fig. 1 zeigt in der Draufsicht ein Kraftfahrzeug 10, bei dem im Bereich der vorderen Stoßstange ein rangingfähiger Sensor 12 eingebaut ist, in diesem Beispiel ein Radarsensor. Der Sensor 12 dient dazu, Objekte und insbesondere potentielle Hindernisse im Vorfeld des Fahrzeugs 10 zu orten. Im gezeigten Beispiel wird ein weiteres Fahrzeug 14 geortet.

Der Sensor 12 bildet zusammen mit einem zugehörigen Datenverarbeitungssystem 12a ein Sicherheitssystem, beispielsweise ein Kollisionswarnsystem oder Kollisionsvermeidungssystem, das eine Kollisionswarnung an den Fahrer ausgibt oder automatisch Maßnahmen zur Vermeidung der Kollision einleitet, wenn die vom Sensor 12 gemessenen Daten ergeben, dass die akute Gefahr einer Kollision mit einem anderen Objekt, beispielsweise mit dem Fahrzeug 14 besteht.

Erfindungsgemäß dient der Sensor 12 jedoch auch dazu, die Position des eigenen Fahrzeugs 10 in einem globalen Koordinatensystem $K_g$ zu bestimmen, und zwar zyklisch in kurzen Zeitintervallen, so dass die Eigenbewegung des Fahrzeugs 10 und eine von diesem Fahrzeug durchfahrene Trajektorie 16 bestimmt und zumindest über eine gewisse Zeitspanne aufgezeichnet werden kann. Anhand dieser Daten kann das Sicherheitssystem dann die dynamischen Parameter wie Geschwindigkeit, Beschleunigung, Giergeschwindigkeit und dergleichen bestimmen, die die Bewegung des eigenen Fahrzeugs 10 beschreiben und die zur Abschätzung der Kollisionsgefahr und/oder zur Planung der günstigsten Ausweichtrajektorie benötigt werden.

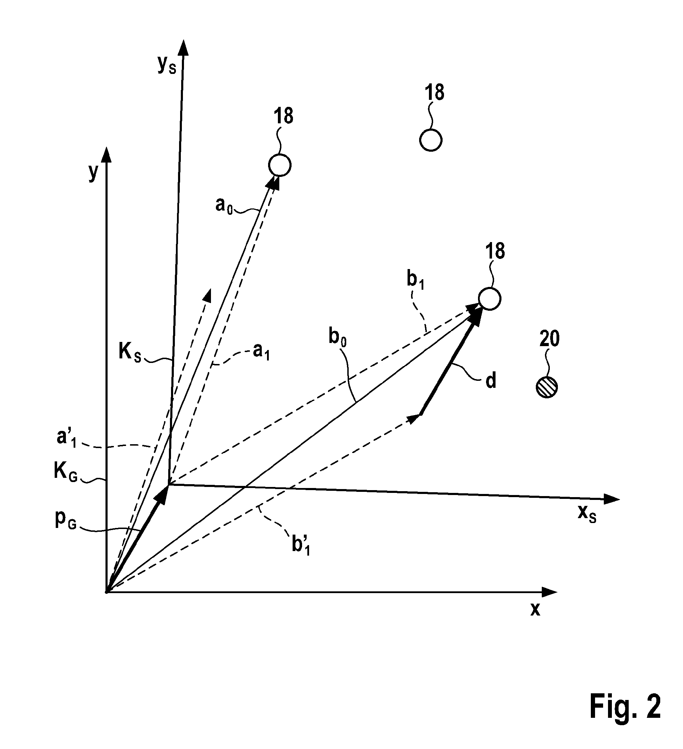

In Fig. 2 ist zusätzlich zu dem globalen Koordinatensystem $K_g$ (mit den Achsen x und y) ein weiteres kartesisches Koordinatensystem (mit Achsen $x_s$ und $y_s$) gezeigt, das als Sensorsystem $K_s$ bezeichnet wird, weil sein Ursprung durch den Ort des Sensors 12 gebildet wird und seine $y_s$-Achse die Vorwärtsrichtung des Sensors 12 angibt.

Weiterhin sind in Fig. 2 drei stationäre Objekte 18 und ein bewegliches Objekt 20 eingezeichnet. Als stationär werden Objekte bezeichnet, die im globalen Koordinatensystemen $K_G$ ruhen. Da sich das Fahrzeug 10 und damit auch der Sensor 12 relativ zum globalen Koordinatensystem $K_G$ und damit auch relativ zu den stationären Objekten 18 bewegen, sind im Sensorsystem $K_s$ alle Objekte 18, 20 scheinbar beweglich. Die stationären Objekte 18 sind jedoch daran zu erkennen, dass sich ihre Abstände relativ zueinander im Laufe der Zeit nicht ändern, während die Abstände des beweglichen Objekts 20 zu jedem der stationären Objekte 18 zeitlich veränderlich sind. Wenn die Anzahl der insgesamt vom Sensor 12 georteten Objekte relativ klein ist, so ist es zweckmäßig, nur solche Objekte als stationär zu betrachten, die einen gewissen Mindestabstand relativ zueinander aufweisen, wobei dieser Mindestabstand in der Richtung $x_s$ größer als die typische Breite eines Lkw und in der Richtung $y_s$ größer als die typische Länge eines Lkw sein sollte. Dadurch wird ausgeschlossen, dass zwei Objekte, bei denen es sich in Wahrheit um zwei verschiedene Reflexionszentren eines einzigen Objekts handelt, fälschlich als stationäres Objekt klassifiziert werden. In der Praxis ist jedoch in den meisten Fällen eine relativ große Anzahl stationärer Objekte wie beispielsweise Leitplankenpfosten, Verkehrsschilder, Objekte am Straßenrand und dergleichen vorhanden, so dass die Unterscheidung zwischen stationären und beweglichen Objekten eindeutig ist.

In der in Fig. 2 dargestellten Situation wird der Einfachheit halber angenommen, dass sich zu einer bestimmten Zeit $t_0$ der Sensor 12 im Ursprung des globalen Koordinatensystems $K_G$ befunden hat und seine Vorwärtsrichtung die Richtung der Achse y dieses globalen Koordinatensystems war. Mit anderen Worten, zum Zeitpunkt $t_0$ war das Sensorsystem mit dem globalen Koordinatensystem identisch. Das in Fig. 2 gezeigte Sensorsystem $K_S$ entspricht dagegen dem Ort und der Orientierung des Sensors 12 zu einem etwas späteren Zeitpunkt $t_1$.

Zum Zeitpunkt $t_0$ hat der Sensor 12 die Ortskoordinaten der stationären Objekte 18 gemessen und dabei für zwei dieser Objekte die Ortsvektoren $a_0$ und $b_0$ erhalten. Zum Zeitpunkt $t_1$ misst der Sensor 12 die Orte derselben Objekte 18 erneut, und er erhält nun die Ortsvektoren $a_1$ und $b_1$. Diese Ortsvektoren $a_1$ und $b_1$ gehen vom Ursprung des Sensorsystems $K_S$ aus. Verschiebt man nun diese Ortsvektoren in den Ursprung des globalen Koordinatensystems $K_G$, so erhält man Vektoren $a'_1$ und $b'_1$, und man kann nun die Differenz $a_1 - a'_1 = b_1 - b'_1 = d$ berechnen, der die scheinbare Ortsveränderung der stationären Objekte 18 angibt. Ursache für diese scheinbare Ortsveränderung ist die tatsächliche Ortsveränderung des Sensors 12 zwischen $t_0$ und $t_1$. Diese Ortsveränderung ist durch einen Vektor $p_G$ gegeben, der die Bewegung des Sensors 12 und damit die Bewegung des Ursprungs des Sensorsystems $K_S$ im globalen Koordinatensystem $K_G$ beschreibt, und es gilt $p_G = d$. Der so erhaltene Vektor $p_G$ liefert somit die Position des Sensors 12 zum Zeitpunkt $t_1$.

Um nun die Bewegung des Sensors 12 und damit des Fahrzeugs 10 weiter zu verfolgen, kann man zu einem etwas späteren Zeitpunkt die Orte der stationären Objekte 18 erneut messen und mit den Ortsvektoren $a_1$ und $b_1$ vergleichen. Ggf. kann man auch die Orte anderer stationärer Objekte messen und mit den Orten aus der vorherigen Messung vergleichen. Die durch diesen Vergleich erhaltene Ortsveränderung liefert dann wieder einen neuen Wert für die globale Position des Sensors.

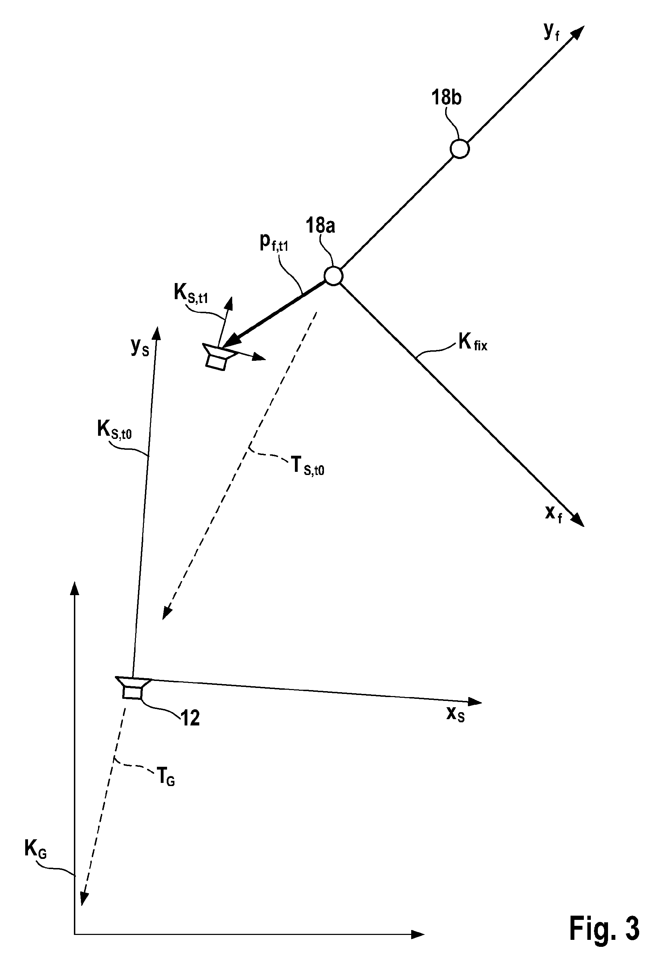

Eine äquivalente, aber aus praktischen Gründen zweckmäßigere Vorgehensweise ist in Fig. 3 illustriert. Gezeigt sind auch hier wieder das globale Koordinatensystem $K_G$ und das Sensorsystem, das sich mit dem Sensor 12 mitbewegt. Das Sensorsystem ist hier jedoch zu einem bestimmten Zeitpunkt $t_0$ ($t_0 > t_1$) gezeigt, an dem sich der Sensor bereits gegenüber dem globalen System bewegt hat, und wird dementsprechend mit $K_{S,t0}$ bezeichnet. Zum Zeitpunkt $t_0$ werden die Orte zweier stationärer Objekte 18a und 18b gemessen. Aus den Koordinaten dieser Objekte im Sensorsystem $K_{S,t0}$ wird nun ein Vektor berechnet, der von dem Objekt 18a zum Objekt 18b führt. Dieser Vektor wird auf eins normiert und liefert einen Basisvektor $y_f$ eines weiteren ortsfesten Koordinatensystems $K_{fix}$, das an die stationären Objekte 18a, 18b "angeheftet" ist. Den zweiten Basisvektor $x_f$ dieses ortsfesten Systems erhält man, indem man den Basisvektor $y_f$ um 90° dreht.

Aus den bekannten Basisvektoren $x_f$ und $y_f$ und den gleichfalls bekannten Basisvektoren $x_s$ und $y_s$ des Sensorsystems $K_{S,t0}$ zum Zeitpunkt $t_0$ lässt sich nun eine Koordinatentransformation $T_{S,t0}$ berechnen, die die Koordinaten vom ortsfesten System $K_{fix}$ in das Sensorsystem $K_{S,t0}$ transformiert. Ebenso lässt sich eine Koordinatentransformation $T_G$ berechnen, die die Koordinaten vom Sensorsystem $K_{S,t0}$ in das globale Koordinatensystem $K_G$ transformiert.

Zu dem Zeitpunkt $t_1$, der etwas später liegt als $t_0$, hat sich der Sensor 12 weiterbewegt, und er definiert nun ein neues Sensorsystem $K_{S,t1}$. Zu diesem Zeitpunkt $t_1$ werden die Koordinaten der Objekte 18a und 18b erneut gemessen.

So erhält man unter anderem einen Ortsvektor, der vom Ursprung des Sensorsystems $K_{S,t1}$ zum Objekt 18a führt. Wenn man das Vorzeichen dieses Vektors umkehrt, erhält man unmittelbar einen Ortsvektor $p_{f,t1}$, der die Lage des Sensors, also des Ursprungs des Sensorsystems $K_{S,t1}$ im ortsfesten System $K_{fix}$ angibt.

Wendet man nun auf diesen Ortsvektor $p_{f,t1}$ die Koordinatentransformation $T_{S,t0}$ an, so erhält man die Koordinaten des Sensors 12 zum Zeitpunkt $t_1$ im "alten" Sensorsystem $K_{S,t0}$. Auf diese Koordinaten kann man nun die Koordinatentransformation $T_G$ anwenden, und man erhält die Koordinaten des Ortsvektors $p_{G,t1}$ des Sensors 12 zum Zeitpunkt $t_1$ im globalen Koordinatensystem $K_G$:

$$p_{G,t1} = T_G * T_{S,t0} * p_{f,t1}$$

Diese Prozedur lässt sich für jeden späteren Zeitpunkt t wiederholen. Dabei kann man die Koordinatentransformationen $T_{S,t0}$ und $T_G$ (d.h., die Matrizen, die diese Transformationen beschreiben) so lange benutzen, wie die Objekte 18a und 18b noch vom Sensor 12 geortet werden können. Sobald eines dieser Objekte (z.B. 18a) den Ortungsbereich zu verlassen droht, wird mit Hilfe eines oder zweier inzwischen neu im Ortungsbereich des Sensors aufgetauchter stationärer Objekte (vorzugsweise jedoch mit Hilfe des Objekts 18b und nur eines neuen Objekts), ein neues ortsfestes Koordinatensystem $K_{fix}$ berechnet, und das zu diesem Zeitpunkt benutzte Sensorsystem $K_{S,t}$ übernimmt die Rolle des bisherigen Systems $K_{S,t0}$, und die Koordinateninformationen $T_{S,t0}$ und $T_G$ werden neu berechnet.

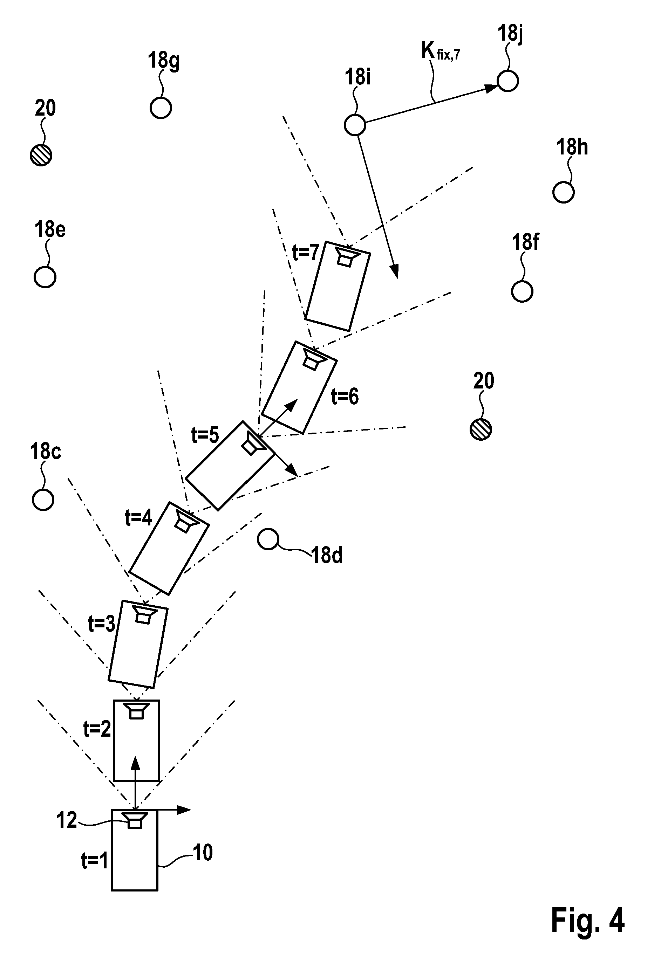

Fig. 4 illustriert schematisch einen Vorgang, bei dem sich das Fahrzeug 10 auf einer S-förmigen Trajektorie an einer Vielzahl von stationären Objekten 18c-18j vorbei bewegt. Stationäre Objekte 20 sind ebenfalls vorhanden, werden aber ignoriert. Der Grundriss des Fahrzeugs 10 mit dem Sensor 12 ist schematisch zu aufeinanderfolgenden Zeitpunkten t = 1, t = 2, ..., t = 7 gezeigt. Der jeweilige Ortungsbereich des Sensors 12 ist durch strichpunktierte Linien angedeutet. Bis zum Zeitpunkt t = 3 sind die Objekte 18c und 18d im Ortungsbereich, so dass sie zur Konstruktion des ortsfesten Koordinatensystems $K_{fix}$ benutzt werden können.

Danach können nacheinander die Objekte 18e bis 18j zur Bildung des ortsfesten Koordinatensystems benutzt werden. In der Zeichnung ist das ortsfeste Koordinatensystem $K_{fix,7}$ zum Zeitpunkt t = 7 gezeigt, das mit den Objekten 18i und 18j konstruiert wird. Die Ortsvektoren $P_{G,t}$ des Sensors 12 im globalen Koordinatensystem $K_G$ werden für die verschiedenen Zeitpunkte t = 1 bis t = 7 aufgezeichnet, so dass sich die in Fig. 4 gezeigte Trajektorie darstellen und analysieren lässt.

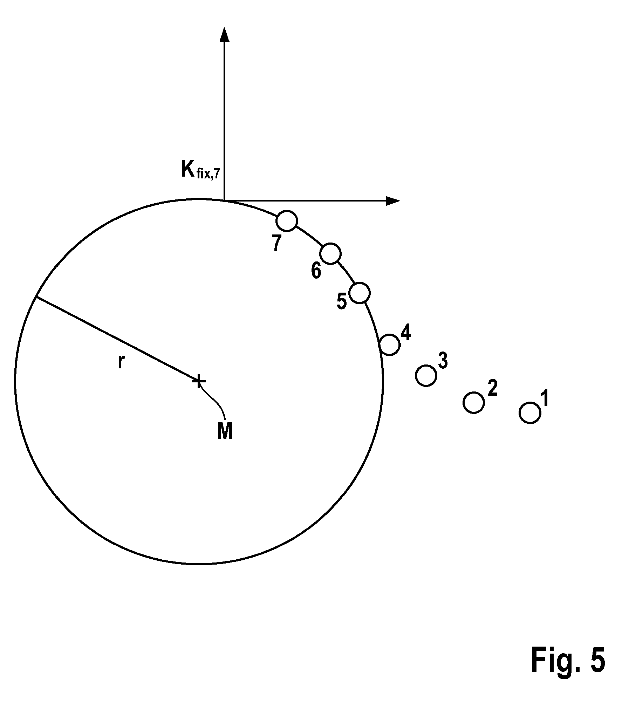

Wahlweise können anstelle dieser Ortsvektoren auch die entsprechenden Ortsvektoren im aktuell benutzten ortsfesten Koordinatensystem $K_{fix,7}$ benutzt werden werden, wie in Fig. 5 gezeigt ist. Die Orte des Sensors 12 zu den verschiedenen Zeitpunkten t = 1 bis t = 7 sind hier der Einfachheit halber mit 1 bis 7 durchnummeriert worden. Vorzugsweise werden die Ortsmessungen in gleichmäßigen Zeitintervallen vorgenommen, so dass die Abstände zwischen den einzelnen Messpunkten in Fig. 5 unmittelbar die Eigengeschwindigkeit (Absolutgeschwindigkeit) des Fahrzeugs 10 angeben. Abstandsänderungen liefern entsprechend ein Maß für die Beschleunigung bzw. Verzögerung.

Um die Stabilität des Fahrzeugs bei einem Ausweichmanöver richtig einschätzen zu können, ist oft auch die Kenntnis der Krümmung der zur Zeit durchfahrenen Trajektorie von Bedeutung. Auch diese lässt sich aus den in Fig. 5 gezeigten Messpunkten berechnen. Bekanntlich wird durch drei Punkte in der Ebene ein Kreis definiert. So liefern in Fig. 5 die Messpunkte für die Zeiten t = 5 bis t = 7 einen Kreis mit dem Mittelpunkt M und dem Radius r. Dieser Radius r und die Koordinaten des Mittelpunkts M lassen sich nach einem bekannten Algorithmus berechnen:

Dazu werden die folgenden Größen definiert:

$$u = (y_6 - y_7)(x_5^2 + y_5^2) + (y_7 - y_5)(x_6^2 + y_6^2) + (y_5 - y_6)(x_7^2 + y_7^2)$$

$$v = (x_7 - x_6)(x_5^2 + y_5^2) + (x_5 - x_7)(x_6^2 + y_6^2) + (x_6 - x_5)(x_7^2 + y_7^2)$$

$$d = x_5 y_6 + x_6 y_7 + x_7 y_5 - x_5 y_7 - x_6 y_5 - x_7 y_6$$

Für die Koordinaten $x_M$ und $y_M$ des Kreismittelpunkts $(x_M, y_M)$ gilt dann:

$$X_M = u/2d$$

und

$$y_M = v/2d$$

und für den Krümmungsradius r gilt:

$$r = ((x_M - x_5)^2 + (y_M - y_5^2))^{1/2}$$

Auf entsprechende Weise lassen sich alle gewünschten dynamischen Größen aus den aufgezeichneten Ortskoordinaten der Messpunkte berechnen und ggf. über die Zeit filtern, um verlässliche Informationen über das dynamische Verhalten des eigenen Fahrzeugs zu gewinnen.

In dem hier beschriebenen Beispiel wurde angenommen, dass das eigene Fahrzeug und die Objekte in einer euklidischen Ebene liegen. Für Fahrzeuge auf der Erdoberfläche ist diese Annahme in guter Näherung erfüllt. Sofern der Sensor 12 auch ein Winkelauflösungsvermögen in Elevation aufweist, lässt sich das Verfahren jedoch problemlos auf eine Ortsbestimmung im Raum erweitern.

Wenn das Verfahren zur Positionsbestimmung in einem Navigationssystem eingesetzt werden soll, so kann man den Verlauf der während der Fahrt aufgezeichneten Trajektorien mit dem entsprechenden Straßenverlauf in einer gespeicherten digitalen Karte abgleichen und so die Verlässlichkeit der Positionsbestimmung überprüfen und ggf. die Genauigkeit verbessern.

Wenn die gespeicherte Karte auch Daten über das Höhenrelief enthält, lässt sich auch die aus dem Höhenrelief resultierende nicht-euklidische Metrik der Erdoberfläche berechnen und zur Korrektur der mit Hilfe des Sensors 12 bestimmten Bewegungsdaten benutzen, so dass man beispielsweise berücksichtigen kann, dass beim Überfahren einer Bergkuppe der zurückgelegte Weg, der sich aus den Sensordaten ergibt, größer ist als der Luftlinie zurückgelegte Weg auf der Karte.

**Patentansprüche**

1. Verfahren zur Bestimmung der Position eines beweglichen, rangingfähigen Sensors (12) in einem globalen Koordinatensystem ($K_G$), **gekennzeichnet durch** die folgenden Schritte:

   (a) zu einem Zeitpunkt $t_0$, an dem die Koordinaten des Sensors (12) im globalen Koordinatensystem ($K_G$) bekannt sind: Messen, mit Hilfe des Sensors (12), der Koordinaten mehrerer stationärer Objekte (18) in einem Sensorsystem ($K_S$), d. h., einem in Bezug auf den Sensor festen Koordinatensystem,
   (b) zu einem späteren Zeitpunkt $t_1$, nachdem der Sensor (12) bewegt wurde: Messen der Änderung der Koordinaten der Objekte (18) im Sensorsystem ($K_S$),
   (c) Bestimmen der Ortsveränderung (d) der Objekte (18) im Sensorsystem ($K_S$),
   Bestimmen der Ortsveränderung des Sensors (12) anhand der gemessenen Änderung der Koordinaten,
   (d) Bestimmen der Koordinaten ($p_G$) des Sensors (12) im globalen Koordinatensystem ($K_G$) zum Zeitpunkt $t_1$,
   (e) Iterieren der Schritte (a) bis (d), jeweils mit dem vorherigen Zeitpunkt $t_1$ als neuem Zeitpunkt $t_0$.

2. Verfahren nach Anspruch 1, bei dem in Schritt (a) zur Erkennung der stationären Objekte (18) das Kriterium benutzt wird, das in einem Ensemble aus einer Vielzahl stationärer Objekte (18) und beweglicher Objekte (20) die Positionen der stationären Objekte (18) relativ zueinander zeitlich unveränderlich sind.

3. Verfahren nach Anspruch 1 oder 2, bei dem zu dem Zeitpunkt $t_0$ anhand der zu diesem Zeitpunkt gemessenen Orte von stationären Objekten (18a, 18b) ein ortsfestes Koordinatensystem (($K_{fix}$) konstruiert wird, eine Koordinatentransformation ($T_{S,t0}$) aus dem ortsfesten Koordinatensystem ($K_{fix}$) in das Sensorsystem (($K_{S,t0}$) zum Zeitpunkt $t_0$ berechnet wird, eine Koordinatentransformation ($T_G$) aus dem Sensorsystem ($K_{S,t0}$) in das globale Koordinatensystem ($K_G$) berechnet wird, und bei dem in Schritt (c) der Ortsvektor ($p_{f,t1}$) des Sensors (12) im ortsfesten Koordinatensystem ($K_{fix}$) bestimmt wird und in Schritt (d) die Koordinatentransformationen ($T_{S,t0}$) und ($T_G$) nacheinander auf diesen Ortsvektor ($p_{f,t1}$) angewandt werden.

4. Verfahren nach Anspruch 3, bei dem zur Konstruktion des ortsfesten Koordinatensystems ($K_{fix}$) die gemessenen Orte von mehr als zwei stationären Objekten benutzt werden.

5. Verfahren nach Anspruch 3 oder 4, bei dem ein neues ortsfestes Koordinatensystem ($K_{fix}$) konstruiert wird, bevor eines der stationären Objekte (18a, 18b), das zur Konstruktion des bisherigen ortsfesten Koordinatensystems gedient hat, den Ortungsbereich des Sensors (12) verlassen hat.

6. Verfahren nach einem der vorstehenden Ansprüche, bei dem eine Bewegungstrajektorie des Sensors (12) im globalen Koordinatensystem ($K_G$) und/oder temporär in einem ortsfesten Koordinatensystem ($K_{fix}$) aufgezeichnet wird und dynamische Parameter, die die Bewegung des Sensors (12) kennzeichnen, anhand der aufgezeichneten Trajektorie berechnet werden.

7. Anwendung des Verfahrens nach einem der vorstehenden Ansprüche in einem Navigationssystem.

8. System zur Bestimmung der Position eines Fahrzeugs, **gekennzeichnet durch** einen beweglichen, rangingfähigen Sensor (12) und ein Datenverarbeitungssystem (12a), das zur Durchführung des Verfahrens nach einem der Ansprüche 1 bis 6 programmiert ist.

9. Computerprogrammprodukt mit Programmcode, der auf einem maschinenlesbaren Speichermedium gespeichert ist und, wenn er auf einem Datenverarbeitungssystem (12a) läuft, an das ein rangingfähiger Sensor (12) angeschlossen ist, das Datenverarbeitungssystem veranlasst, das Verfahren nach einem der Ansprüche 1 bis 6 auszuführen.

**Fig. 1**

Fig. 2

Fig. 3

Fig. 4

$K_{fix,7}$

7

6

5

4

3

2

1

r

+

M

Fig. 5

Europäisches
Patentamt

European
Patent Office

Office européen
des brevets

**EUROPÄISCHER RECHERCHENBERICHT**

Nummer der Anmeldung

EP 15 17 9276

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2004 010197 A1 (IBEO AUTOMOBILE SENSOR GMBH [DE]) 15. September 2005 (2005-09-15) * das ganze Dokument * ----- | 1-9 | INV. G01S7/295 G01S13/93 |
| A | US 2011/295549 A1 (TAKABAYASHI YUKI [JP] ET AL) 1. Dezember 2011 (2011-12-01) * das ganze Dokument * ----- | 1-9 | |
| X | EP 1 418 444 A1 (IBEO AUTOMOBILE SENSOR GMBH [DE]) 12. Mai 2004 (2004-05-12) * das ganze Dokument * ----- | 1 | |
| A | DE 10 2006 008275 A1 (SIEMENS AG [DE]) 23. August 2007 (2007-08-23) * das ganze Dokument * ----- | 1-9 | |

RECHERCHIERTE
SACHGEBIETE (IPC)

G01S

Der vorliegende Recherchenbericht wurde für alle Patentansprüche erstellt

| Recherchenort | Abschlußdatum der Recherche | Prüfer |
|---|---|---|
| München | 20. Januar 2016 | Rudolf, Hans |

KATEGORIE DER GENANNTEN DOKUMENTE

X : von besonderer Bedeutung allein betrachtet
Y : von besonderer Bedeutung in Verbindung mit einer
     anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
     nach dem Anmeldedatum veröffentlicht worden ist
D : in der Anmeldung angeführtes Dokument
L : aus anderen Gründen angeführtes Dokument

................................................................
& : Mitglied der gleichen Patentfamilie, übereinstimmendes
     Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 15 17 9276

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

20-01-2016

| Im Recherchenbericht angeführtes Patentdokument | Datum der Veröffentlichung | Mitglied(er) der Patentfamilie | | Datum der Veröffentlichung |
|---|---|---|---|---|
| DE 102004010197 A1 | 15-09-2005 | KEINE | | |
| US 2011295549 A1 | 01-12-2011 | CN | 102288957 A | 21-12-2011 |
| | | EP | 2390680 A1 | 30-11-2011 |
| | | JP | 5610847 B2 | 22-10-2014 |
| | | JP | 2011247721 A | 08-12-2011 |
| | | US | 2011295549 A1 | 01-12-2011 |
| EP 1418444 A1 | 12-05-2004 | AT | 494563 T | 15-01-2011 |
| | | DE | 10252323 A1 | 19-05-2004 |
| | | EP | 1418444 A1 | 12-05-2004 |
| DE 102006008275 A1 | 23-08-2007 | DE | 102006008275 A1 | 23-08-2007 |
| | | EP | 1987371 A1 | 05-11-2008 |
| | | JP | 4971369 B2 | 11-07-2012 |
| | | JP | 2009527751 A | 30-07-2009 |
| | | US | 2009310117 A1 | 17-12-2009 |
| | | WO | 2007096240 A1 | 30-08-2007 |

EPO FORM P0461

Für nähere Einzelheiten zu diesem Anhang : siehe Amtsblatt des Europäischen Patentamts, Nr.12/82